# EUROPÄISCHE PATENTSCHRIFT

(11) **EP 1 525 912 B1**
(45) Veröffentlichungstag und Bekanntmachung des Hinweises auf die Patenterteilung: **09.08.2006**
(21) Anmeldenummer: 03103809.4
(22) Anmeldetag: 15.10.2003
(51) Int. Cl.: B01D 29/01, F01M 5/00, B01D 35/18

(54) **Anordnung zur Aufbereitung von Motoröl in einem Kraftfahrzeug**
Device for treating oil in an engine
Dispositif pour le traitement de l'huile dans un moteur

(43) Veröffentlichungstag der Anmeldung: 27.04.2005
(73) Patentinhaber: Ford Global Technologies, LLC, A subsidary of Ford Motor Company, Dearborn, MI 48126 (US)
(72) Erfinder: Yacoub, Yasser Mohammed Sayed, 50858, Köln (DE); Moraal, Paul Eduard, 6291 VP, Vaals (NL)
(74) Vertreter: Drömer, Hans-Carsten

(56) Entgegenhaltungen:
- US-A- 2 785 109
- US-A- 4 261 838
- US-A- 4 388 185
- US-A- 4 443 334
- US-A- 5 242 034

## Beschreibung

Die vorliegende Erfindung betrifft eine Anordnung zur Aufbereitung von Motoröl im Schmierölkreislauf eines Kraftfahrzeugs gemäß dem Oberbegriff des Patentanspruches 1.

Kraftstoffverunreinigungen im Motoröl stellen bei aktuellen Kraftfahrzeugen ein gravierendes Problem dar. Derartige Kraftstoffverunreinigungen treten insbesondere bei bestimmten Motorbetriebsarten auf, die zum Betrieb bzw. zur Regeneration moderner Abgasnachbehandlungssysteme erforderlich sind. Ein derartiger kritischer Betriebsmodus ist insbesondere die Nacheinspritzung von Kraftstoff in den Zylinder eines Verbrennungsmotors, d.h. die Einspritzung zusätzlichen Kraftstoffs in einen oder mehrere Zylinder nach dem jeweiligen Haupteinspritzvorgang, jedoch noch während des Arbeitshubes. Derartige Nacheinspritzungen stellen eine effektive Methode zur Erhöhung der Abgastemperaturen und/oder zum kurzfristigen Erreichen eines angereicherten Gemisches dar, wobei vorteilhafterweise das Motordrehmoment im Wesentlichen unverändert bleibt.

Ein derartiger Betriebsmodus ist beispielsweise für die periodische Verbrennung von Ruß in einem Partikelfilter eines Dieselmotors bei hohen Abgastemperaturen oder für die Regeneration einer Stickoxidfalle zur Freisetzung des während Magerbetriebszuständen angesammelten Stickstoffs besonders zweckmäßig. Abhängig von der Anzahl, dem Ausmaß und dem Zeitpunkt der Nacheinspritzvorgänge während des Arbeitshubes mischt sich ein Teil des nacheingespritzten Kraftstoffs mit dem Ölfilm auf den Zylinderwänden und gelangt zusammen mit den Blow-By-Gasen in den Motorsumpf, wodurch eine Kraftstoffverunreinigung des Motoröls auftritt. Dabei nimmt die Kraftstoffverunreinigung für jeden Einspritzvorgang abhängig von dem Ausmaß der Verzögerung gegenüber dem Hautpeinspritzvorgang und der Menge des nacheingespritzten Kraftstoffs zu. Außerdem nimmt die Kraftstoffverunreinigung bei niedrigeren Öltemperaturen und insbesondere bei Kraftstoffen mit schwereren Kohlenwasserstoffbestandteilen zu, d. h., daß das vorstehend beschriebene Problem bei Dieselmotoren gravierender ist als für mit Benzin betriebene Ottomotoren. Erschwerend kommt hinzu, daß das Problem der Motorölverunreinigung sehr stark von dem Betriebsmodus des Kraftfahrzeuges abhängt. So kann bei häufigen Kaltstarts und einem anschließenden Kurzstreckenbetrieb die entstehende Ölverunreinigung fünfmal so stark sein als bei einem Betrieb, bei dem der Motor im Wesentlichen im aufgewärmten Zustand betrieben wird. Deshalb muß derartigen Worst-Case-Situationen mit vorgegebenen Ölwechselintervallen (typischerweise alle 15.000 Kilometer oder jährlich) Rechnung getragen werden, wodurch die Betriebskosten erhöht und durch den Austausch von ansonsten noch verwendbaren Öls unnötige Ressourcen verbraucht werden.

Die Verunreinigung des Motoröls durch Kraftstoffbestandteile hat einen negativen Effekt auf den Motorverschleiß und kann insbesondere bei Stadtfahrten (Fahrten mit geringen Geschwindigkeiten und Lasten, insbesondere mit Durchschnittsgeschwindigkeiten von 15 bis 20 km/h) und anschließenden Autobahnfahrten (Volllast) sogar zu einer Beschädigung des Motors führen. Diese negativen Effekte sind im Wesentlichen durch zwei Phänomene bedingt, die durch die Verunreinigung des Öls auftreten: Zum einen werden die physikalischen Eigenschaften des Schmieröls beeinträchtigt (insbesondere die Viskosität), was zu einem höheren Motorverschleiß führt. Außerdem erhöht sich das Niveau des Motoröls im Kurbelwellengehäuse. Bei hohen Verunreinigungsraten (bis zu 25 Gewichtsprozent) kann die Schmiermittelmischung (Kraftstoff und Öl) in die Brennkammern der Zylinder übertreten und insbesondere bei Verzögerungsbetriebszuständen zu unkontrollierten Verbrennungen und damit schweren Motorschäden führen. Bei Dieselmotoren mit Partikelfiltern, die eine regelmäßige Regeneration durch Rußverbrennung benötigen, sowie bei Verbrennungsmotoren mit Stickoxidfallen, die ebenfalls eine regelmäßige Regeneration benötigen, tritt das Problem der Kraftstoffverunreinigung des Motoröls in den Regenerationsmodi unter ungünstigen Bedingungen derart verstärkt auf, daß dieses Phänomen sogar ein Hindernis für den Einsatz dieser Abgasbehandlungsanordnungen an sich darstellt.

Deshalb sind Maßnahmen äußerst wünschenswert, mit denen diesem vorgenannten Problem entgegengewirkt werden kann. Hierzu ist es bereits bekannt, das Motoröl im Kraftfahrzeug während des laufenden Betriebs einer Regeneration zu u n-terziehen. Dabei wird das Öl in einer Regenerationsanordnung über seine normale Betriebstemperatur hinaus erhitzt, wodurch die im Motoröl enthaltenen und einen geringeren Siedepunkt als das Öl aufweisenden Kraftstoffbestandteile verdampfen. Die entstehenden Dämpfe werden abgesaugt oder durch ein Überdruckventil abgelassen und können dem Verbrennungsgemisch beigefügt und auf diese Weise verwertet werden.

Eine derartige Regenerationsanordnung ist aus der US 4,261,838 bekannt.

Eine weitere Regenerationsanordnung ist aus der WO 96/25996 bekannt. Gemäß diesem Dokument ist in der Ölfiltereinheit eine Verdampfungskammer mit elektrisch beheizten Scheiben vorgesehen, an denen der gesamte, im Verbrennungsmotor umgepumpte Ölstrom entlang fließt und dabei auf Temperaturen zwischen 115 und 135 °C erhitzt werden soll. Derartige Temperaturen reichen jedoch nicht aus, um hochsiedende Bestandteile - insbesondere aus Dieselkraftstoffen - aus dem Motoröl wirksam zu entfernen. Trotz der vorgeschlagenen, relativ niedrigen Destillationstemperaturen sind für die Heizung der bekannten Anordnung typische elektrische Leistungen von etwa 180 Watt erforderlich, wodurch die elektrische Anlage des Kraftfahrzeuges stark belastet und die Kraftstoffökonomie letztlich negativ beeinflußt wird. Zum Erreichen höherer Temperaturen wären Heizleistungen im Bereich einiger hundert Watt erforderlich, die die im Kraftfahrzeug verfügbaren elektrischen Leistungen überschreiten würden und die Kraftstoffökonomie deutlich verschlechtern würden.

Aus der gattungsgemäßen US 57 07 515 ist eine Anordnung zur Aufbereitung von Motoröl im Schmierölkreislauf eines Verbrennungsmotors bekannt, bei der nicht - wie bei der vorstehend genannten Schrift - der vollständige Motorölstrom, sondern lediglich ein Teilstrom von weniger als 50 % des umgepumpten Gesamtstroms einer Aufbereitung unterzogen wird. Hierzu fließt Motoröl unter Schwerkraftwirkung an einer elektrische beheizten Halbkugel herab. Die dabei verdampfenden Verunreinigungen werden in die Einlaßanordnung des Kraftfahrzeuges zurückgeführt, wobei ein Überdruckventil vorgesehen ist, das sich erst öffnet, wenn sich ein bestimmter Gasdruck aufgebaut hat. Als Temperatur der elektrische beheizten Halbkugel werden etwa 90 Grad Celsius (190 °F) vorgeschlagen, so daß mit dieser Anordnung im Wesentlichen nur leicht flüchtige Kraftstoffbestandteile sowie Wasser verdampft werden können.

Eine der vorstehend beschriebenen Anordnung vergleichbare Ölaufbereitungseinrichtung, bei der ein Motorölteilstrom im Vorbeifluß an geheizten Flächen auf relativ geringe Temperaturen von etwa 90 °C gebracht wird und die entstehenden Gase abgeführt werden, ist aus der WO 97/26978 bekannt.

Aus der US 60 53 143 ist es schließlich bekannt, das Motoröl einer Regeneration unter erhöhten Temperaturen im Bereich zwischen 170 und 260 °C zu unterziehen, um hierdurch sowohl die Kraftstoffverunreinigungen zu verdampfen als auch die physikalischen Eigenschaften des Schmieröls zu verbessern und den Kraftstoffverbrauch hierdurch zu senken. Eine konkrete, im Kraftfahrzeug einsetzbare Anordnung zum Erreichen derartig hoher Regenerationstemperaturen unter vertretbarem Energieeinsatz ist aus diesem Dokument jedoch nicht bekannt, es wird vielmehr lediglich ein Versuchsaufbau beschrieben, bei dem der gesamte Motorölstrom durch beheizte Kanäle geleitet und hierdurch auf die erforderlichen Temperaturen gebracht wird.

Der Erfindung liegt dementsprechend die Aufgabe zugrunde, eine Anordnung der eingangs genannten Art zu schaffen, mittels derer bei geringem Energieeinsatz und geringem Platzbedarf sowie geringem konstruktiven Aufwand eine Regeneration des Motoröls mit höheren Temperaturen ermöglicht wird.

Die Lösung der vorgenannten Aufgabe erfolgt gemäß den kennzeichnenden Merkmalen des Patentanspruches 1.

Vorteilhafte Ausgestaltungen der Erfindung ergeben sich aus den Unteransprüchen.

Im Rahmen der vorliegenden Erfindung ist - im Gegensatz zum Stand der Technik, bei dem das Motoröl beim Durchgang durch beheizte Kanäle oder bei Benetzung beheizter Flächen erhitzt wird - vorgesehen, daß in einem Destillationsraum ein bestimmtes Motorölniveau aufrechterhalten wird, wobei dieses Ölreservoir von einem untenliegenden Heizelement auf eine gewünschte Temperatur gebracht wird, während - ständig oder nur zeitweise - Motoröl aus dem Motorölkreislauf zugeführt und gleichzeitig Öl aus dem Destillationsraum wieder abgeführt wird.

Dieses Konstruktionsprinzip erlaubt es, besonders kleine und kompakte Aufbereitungsanordnungen zu schaffen, denen dann nur ein kleiner Teil des gesamten Ölflusses im Schmierölkreislauf des Verbrennungsmotors zugeführt wird, wodurch hohe Regenerationstemperaturen bei Einsatz vergleichsweise geringer elektrischer Heizleistungen ermöglicht werden. Dem liegt die Erkenntnis zugrunde, daß eine Regeneration des kompletten Ölstroms bei jedem Umlauf im Schmierölkreislauf bei weitem nicht erforderlich ist, sondern daß es ausreicht, lediglich einen kleinen Teil des Öls einer Regenerationsbehandlung zu unterziehen, um so die Kraftstoffverunreinigungen auf einem Niveau zu halten, das den Betrieb des Kraftfahrzeuges nicht beeinträchtigt.

Dadurch, daß nur ein relativ geringer Teil des Motoröls auf hohe Temperaturen aufgeheizt wird, wird zudem vermieden, daß die Motoröltemperatur durch die Zumischung des erhitzten Öls insgesamt signifikant ansteigt, was zu schlechteren Schmiereigenschaften führen würde.

Zur Aufrechterhaltung eines vorgegebenen Motorölniveaus im Destillationsraum sind in einer bevorzugten Ausgestaltung der Erfindung Ventileinrichtungen am ÖIeinlaß und/oder am Ölauslaß vorgesehen, mittels derer die in den Destillationsraum einfließende bzw. aus dem Destillationsraum wieder ausströmende Motorölmenge begrenzt wird. Da der Motoröldruck bekanntlich abhängig vom Betriebszustand des Kraftfahrzeuges - insbesondere der Drehzahl und der Öltemperatur - stark variiert, kann entweder vorgesehen sein, daß der Durchfluß durch eine aktive Steuerung der genannten Ventile entsprechend dem Motoröldruck angepaßt wird, um ein möglichst konstantes Niveau im Destillationsraum und eine konstante Durchflußmenge durch den Destillationsraum sicherzustellen. Alternativ kann in einer bevorzugten Ausführungsform der Erfindung durch die Ventile ein konstanter Strömungswiderstand derart eingestellt werden, daß bei einem Motorbetrieb mit einem durchschnittlichen Öldruck ein gewünschtes Ölniveau aufrechterhalten wird. Bei Betrieb des Motors mit höheren Drehzahlen strömt jedoch in dieser Ausführungsform der Erfindung zuviel Öl in den Destillationsraum. Damit das Motorölniveau nicht über einen gewünschten Maximalwert ansteigt, ist in diesem Falle eine Überlauföffnung vorgesehen, die so groß dimensioniert ist, daß auch bei maximalem Öldruck das "zuviel" in den Destillationsraum einströmte Öl abgeführt und das Ölniveau somit begrenzt wird. Eine weitere Funktion der Überlauföffnung besteht darin, für den Fall eines defekten (d. h. zu weit geöffneten) Einlaßventils oder eines blockierten Auslaßventils ein "Überlaufen" des Destillationsraumes zu verhindern.

Alternativ kann der Strömungswiderstand derart eingestellt sein, daß bei niedrigem Öldruck (Motorbetrieb im Leerlauf und niedriger Drehzahl) überhaupt kein Öl einströmt. Das System wird dann wie folgt betrieben: bei höherer Drehzahl (d. h. höherem Öldruck) wird der Destillationsraum gefüllt; das Heizelement ist ausgeschaltet. Bei niedriger Drehzahl wird dann die Heizung so lange eingeschaltet wie notwendig, um die Zieltemperatur (160 °C bis 180 °C) zu erreichen (und danach bevorzugt solange ausgeschaltet, bis wieder neues Öl in einer nachfolgenden Phase höheren Motoröldrucks eingeströmt ist). Der Vorteil einer solchen Anordnung besteht darin, daß die Destillationstemperatur sehr genau über die Heizdauer gesteuert werden kann. Da die in dem Destillationsraum befindliche Ölmenge und deren Ausgangstemperatur (Motoröltemperatur) bekannt ist, kann die genannte Heizungsdauer auch ohne einen separaten Temperatursensor im Destillationsraum durch Berechnung und reine Zeitsteuerung bestimmt werden. Die vorstehend beschriebene Betriebsart der erfindungsgemäßen Aufbereitungsanordnung trägt dem Umstand Rechnung, daß Kraftstoffverunreinigungen gerade dann verstärkt auftreten, wenn der Motor häufig im niedrigen bis unteren Drehzahlbereich (z. B. Stadtverkehr) mit häufigen Leerlaufphasen betrieben wird. Bei der vorstehend beschriebenen Betriebsart findet die Aufbereitung gerade bei derartigen Betriebszuständen mit häufig niedrigem Öldruck statt. Insgesamt wird damit eine automatische Anpassung der Aufbereitungshäufigkeit an die Betriebsbedingungen erreicht und somit insgesamt elektrische Heizenergie eingespart.

Für den Fall extremer Öldrücke, wie sie beispielsweise bei einem Kaltstart mit direkt anschließendem hochtourigen Motorbetrieb auftreten können, kann im Rahmen einer bevorzugten Ausgestaltung der Erfindung zusätzlich ein Überdruckventil in der Zuführung zum Einlaß des Destillationsraums vorgesehen sein, durch welches die Anordnung bei Überschreiten eines vorgegebenen Grenzdruckes kurzgeschlossen wird (Bypaß).

Die zuletzt beschriebene Ausführungsform, bei der die Ventile lediglich als Drossein bzw. Engstellen in den Zufuhr- und Abfuhrkanälen ausgebildet sind, kommt somit mit einem geringen konstruktiven und steuerungstechnischen Aufwand aus, wobei durch die Dimensionierung der Drosseln die Durchflußmenge durch den Destillationsraum und damit die Verweildauer des Motoröls wesentlich besser gesteuert werden kann als bei bekannten Aufbereitungsanordnungen, bei denen das Motoröl an geheizten Flächen entlang läuft. Bei letzteren Lösungsansätzen kann die Regerationstemperatur des Öls bei gleichbleibender Geometrie der Anordnung nur durch eine Anpassung der Heizleistung verändert werden, da die Kontaktzeit des Öls mit den beheizten Flächen im Wesentlichen feststeht, wohingegen bei der erfindungsgemäßen Lösung die Verweilzeit des Öls ohne Aufwand und bei konstanter Geometrie durch die Regelung des Zu- und Abflusses in einem weiten Bereich bzw. durch eine diskontinuierliche Zufuhr auch ohne Anpassung der Heizleistung eingestellt werden kann.

Um zu vermeiden, daß das Ölniveau im Destillationsraum unter ein bestimmtes Mindestniveau sinkt und dadurch das Heizelement freiliegt, kann vorgesehen sein, daß die Auslaßöffnung seitlich an der Wand des Destillationsraums auf einer bestimmten Höhe angeordnet ist, so daß im Destillationsraum stets eine vorgegebene Mindestölmenge verbleibt.

Die aus dem Motoröl verdampfenden Verunreinigungen werden einem Gasauslaß im oberen Bereich des Destillationsraumes zugeführt. Dieser Gasauslaß ist bevorzugt ständig mit einem Unterdruck führenden Teil des Einlaß- oder Auslaßsystems des Verbrennungsmotors verbunden. Der Einspeisungspunkt kann beispielsweise in Strömungsrichtung oberhalb eines Turboladers oder in Strömungsrichtung unterhalb einer Abgasrückführungs-Drosselklappe (EGR-Drossel) liegen. Durch den daraus resultierenden ständigen Unterdruck im Destillationsraum wird auch der Partialdruck der aus dem Motoröl verdampfenden Verunreinigungen reduziert und damit die Effizienz des Regenerationsvorganges verstärkt. Durch die vorstehend beschriebenen Maßnahmen zur Verhinderung eines "Überlaufs" des Destillationsraumes wird in diesem Zusammenhang zuverlässig verhindert, daß Motoröl in die Einlaß- bzw. Auslaßanordnung des Verbrennungsmotors gelangen kann.

Alternativ oder zusätzlich können die aus dem Gasauslaß austretenden gasförmigen Substanzen auch an einem Kondensator, d. h. einer gekühlten Fläche, kondensiert werden und in flüssiger Form dem Kraftstoffsystem des Motors wieder zugeführt werden.

Ein wichtiger Aspekt der vorliegenden Erfindung, der grundsätzlich unabhängig von der vorstehend beschriebenen konkreten Ausgestaltung des Destillationsraumes ist, liegt darin, einen nur relativ geringen Anteil von typischerweise weniger als ein Prozent des Motorölstroms einer Regeneration bei relativ hohen Temperaturen zwischen 150 und 260 °C zu unterziehen, und dabei in Kauf zu nehmen, daß die Regeneration der kompletten in dem Motor vorhandenen Ölmenge eine längere Zeitdauer (typischerweise etliche Stunden) in Anspruch nimmt. Dies erlaubt eine miniaturisierte Bauweise der erfindungsgemäßen Regenerationsanordnung (beispielsweise mit einer Kapazität von lediglich 2 ml), die dadurch problemlos in verschiedene andere Motorkomponenten wie z. B. in den Ölkühler, einen Abgasmassenstromsensor, einen Abgasrückführungskühler oder in den Motorblock zu integrieren ist und einen vergleichsweise geringen Energiebedarf von typischerweise etwa 40 W aufweist.

Die Erfindung wird nachfolgend anhand der Zeichnungen beispielhaft näher erläutert. Es zeigen:
- Figur 1: eine schematische Darstellung einer erfindungsgemäßen Aufbereitungsanordnung in einem ebenfalls schematisch dargestellten ÖIkreislauf eines Verbrennungsmotors;
- Figur 2: eine schematische Ansicht einer Ausführungsform der erfindungsgemäßen Aufbereitungsanordnung;
- Figur 3: ein Diagramm, das die Kapazität einer zylindrischen Aufbereitungsanordnung abhängig von der Geometrie zeigt;
- Figur 4: ein Diagramm, das die Oberfläche der zylindrischen Regenerationsanordnung abhängig von der Kapazität darstellt;
- Figur 5: ein Diagramm, das für Aufbereitungsanordnungen mit unterschiedlichen Kapazitäten und bei unterschiedlichen Heizleistungen die Zeit darstellt, die bis zum Erreichen eines Füllungs-Gleichgewichtszustandes vergeht;
- Figur 6: ein Diagramm, das für Aufbereitungsanordnungen mit unterschiedlichen Kapazitäten und bei unterschiedlichen Heizleistungen die Zeit darstellt, die bis zum Erreichen eines Temperatur-Gleichgewichtszustandes vergeht, und
- Figur 7: ein Diagramm, das für unterschiedliche Kapazitäten die für die Regeneration des vollständigen Ölvorrats erforderliche Zeit abhängig von der Heizleistung veranschaulicht.

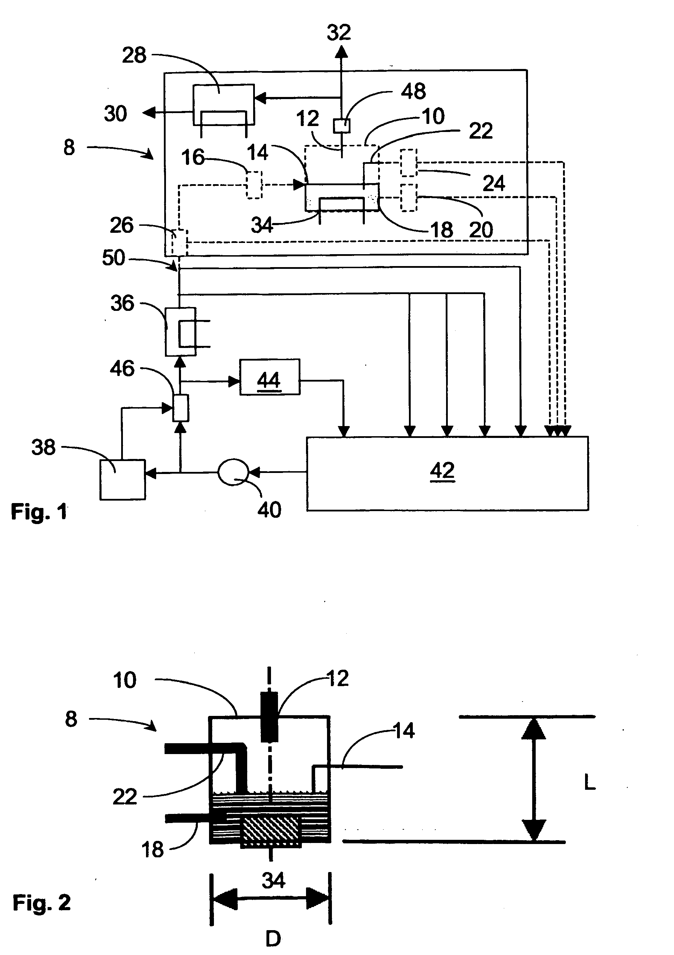

In Figur 1 ist ein Ölkreislauf eines (nicht im Einzelnen dargestellten) Verbrennungsmotors schematisch dargestellt. Der Ölkreislauf weist eine Ölpumpe 40 auf, die in einem Ölsumpf 42 befindliches Motoröl über einen konventionellen Ölfilter 38 einem Druckölkreislauf zuführt. Falls der Ölfilter 38 zugesetzt sein sollte, kann die Ölzirkulation über ein Bypaßventil 46 aufrechterhalten werden. Das unter Druck stehende Öl wird den zu schmierenden Verbrauchsstellen, wie beispielsweise einem Turbolader 44, zugeführt, wobei zur Aufrechterhaltung einer bestimmten Betriebstemperatur ein Ölkühler 36 in den Ölkreislauf integriert ist. Das Öl strömt nach seiner Verwendung drucklos in den Ölsumpf 42 zurück, wie durch die entsprechenden Pfeile oberhalb des Ölsumpfs 42 angedeutet.

Um Kraftstoffverunreinigungen aus dem Motoröl zu entfernen, wird ein kleiner Teil des Motorölstromes einer insgesamt mit 8 bezeichneten Motoröl-Aufbereitungsanordnung zugeführt. Die Aufbereitungsanordnung 8 weist einen Destillationsraum 10 auf, in dessen unterem Bereich ein elektrisches Heizelement 34 angeordnet ist. Das Heizelement 34 wird über eine - nicht dargestellte - elektrische Anschlußleitung mit Energie von einer elektrischen Anlage versorgt. Alternativ kann zur Heizung des Destillationsraumes 10 auch eine andere Wärmequelle, insbesondere die Wärme heißer Abgase, herangezogen werden. Die Temperatur im Destillationsraum 10 wird über eine - nicht näher dargestellte - Thermostatei nheit auf einen Zieltemperaturwert hin geregelt.

Dem Destillationsraum 10 wird über einen Öleinlaß 14 ein an einer Stelle 50 des Ölkreislaufs abgezweigter kleiner Anteil des druckbehafteten Motorölstromes zugeführt. Die Durchflußmenge durch den Öleinlaß 14 wird durch ein - in diesem Falle fest eingestelltes - Drosselventil 16 begrenzt, dessen Durchflußrate auf einen mittleren Öldruck hin ausgelegt ist, so daß bei diesem mittleren Druck das gewünschte Niveau im Destillationsraum erzielt wird. Bei niedrigem Öldruck kann die Durchflußrate - je nach Auslegung - ganz auf Null gehen. Ferner ist ein Überdruckventil 26 vorgesehen, durch welches bei besonders hohen Motoröldrücken das Öl an der Aufbereitungsanordnung 8 vorbei direkt in den Ölsumpf 42 abgeleitet wird. In dem Destillationsraum 10 wird das Öl durch die Heizeinrichtung 34 auf eine Temperatur von typischerweise etwa 160 °C bis 180 °C erhitzt, wodurch die im Öl enthaltenen Kraftstoffbestandteile verdampfen. Durch einen Ölauslaß 18 wird das Öl aus dem Behälter wieder heraus geführt und gelangt über ein in diesem Ausführungsbeispiel auf eine feste Durchflußrate eingestelltes Drosselventil 20 wieder in den Ölsumpf 42 zurück. Da der am Öleinlaß 14 anliegende Motoröldruck über den Betriebsbereich des Motors stark variiert, variiert die durch den Öleinlaß 14 eingelassene Motorölmenge ebenfalls stark, wohingegen die über den Ölauslaß 18 abfließende Ölmenge im Wesentlichen konstant bleibt. Daher führt eine Erhöhung des Motoröldrucks dazu, daß der Ölstand im Destillationsraum über das gewünschte Maß hinaus ansteigen kann. Übersteigt der Ölstand im Destillationsraum 10 ein vorgegebenes Maximalniveau, so gelangt das überschüssige Öl über eine Überlauföffnung 22 und ein Drosselventil 24 ebenfalls wieder in den Ölsumpf 42 zurück. In den Betriebsbereichen, in denen ein Überlauf auftritt, ist es möglich, daß das Öl aufgrund des zu großen Gesamtdurchsatzes durch die Heizeinrichtung nicht ausreichend erhitzt werden kann. Da diese hochtourigen Betriebsbereiche jedoch relativ selten auftreten und insbesondere hinsichtlich der Kraftstoffverunreinigung des Motoröls in der Regel nicht besonders kritisch sind, kann hingenommen werden, daß die Regeneration in diesen Betriebsbereichen nicht optimal durchgeführt werden kann. Dieser Tatbestand kann vorteilhaft genutzt werden, indem die Heizeinrichtung nur dann eingeschaltet wird, wenn kein Überlauf auftritt, oder sogar nur in dem Betriebbereich, in dem - bei entsprechend starker Drosselung des Einlaßventils - kein Öleinlaß auftritt (Leerlauf und niedrige Drehzahl), wobei in diesem Fall die Destillationstemperatur sehr genau über die Heizdauer geregelt werden kann.

Die verdampfenden Kraftstoffbestandteile werden über einen im oberen Bereich des Destillationsraumes 10 angeordneten Gasauslaß 12 abgeführt. Dieser Gasauslaß ist über ein weiteres Drosselventil 48 mit einer Stelle des Einlaß- bzw. Auslaßsystems verbunden, an der ein Unterdruck herrscht, wie z. B. einer Stelle im Abgassystem vor dem Turbolader 44. Durch den entsprechenden Unterdruck wird der Destillationsvorgang beschleunigt und somit die Heizenergieeffizienz der Anordnung 8 erhöht. Die Kraftstoffdämpfe werden dann in das Einlaß- bzw. Auslaßsystem eingespeist und dort verbrannt. Alternativ oder zusätzlich können die Kraftstoffdämpfe an einem Kondensator 28 kondensiert werden und in flüssiger Form über die Leitung 30 in die Kraftstoffanlage zurückgeführt werden.

Figur 2 zeigt eine Aufbereitungsanordnung 8 in detaillierterer Darstellung. Es handelt sich um eine miniaturisierte Anordnung mit zylindrischer Grundfläche, wobei die Länge L 16 mm und der Zylinderdurchmesser D 20 mm beträgt. Das gespeicherte Ölvolumen im Gleichgewichtszustand (nachfolgend als Kapazität bezeichnet) beträgt bei dieser Anordnung etwa 2 ml. Bei geeigneter Dimensionierung der Massenströme des zufließenden und abfließenden Öls lassen sich folgende Kenndaten mit der in Figur 2 dargestellten Anordnung erreichen: Bei Betriebsbeginn stellt sich ein Füllungsgleichgewicht nach etwa 94 Sekunden ein. Die Gleichgewichtstemperatur stellt sich nach etwa 30 Sekunden ein. Eine Erhöhung der Motoröltemperatur um 100 °C läßt sich mit einer Heizleistung von etwa 33 W erreichen. Insgesamt wird für eine komplette Regeneration einer Gesamtölmenge von 4,5 I eine Zeit von 6,25 Stunden benötigt, sofern der Öldruck 3 bar beträgt. Bei einem Öldruck von 8 bar kann eine vollständige Regeneration des Motoröls bereits innerhalb von 2,21 Stunden erfolgen (allerdings bei höherer erforderlicher Heizleistung). Bei einem niedrigem Öldruck von 0,5 bar ergibt sich dagegen eine Regenerationsdauer von etwa 9 h. Insgesamt läßt sich mit einer derartigen miniaturisierten Aufbereitungsanordnung eine ausreichend schnelle Aufbereitung bei einem relativ niedrigen Energieverbrauch realisieren.

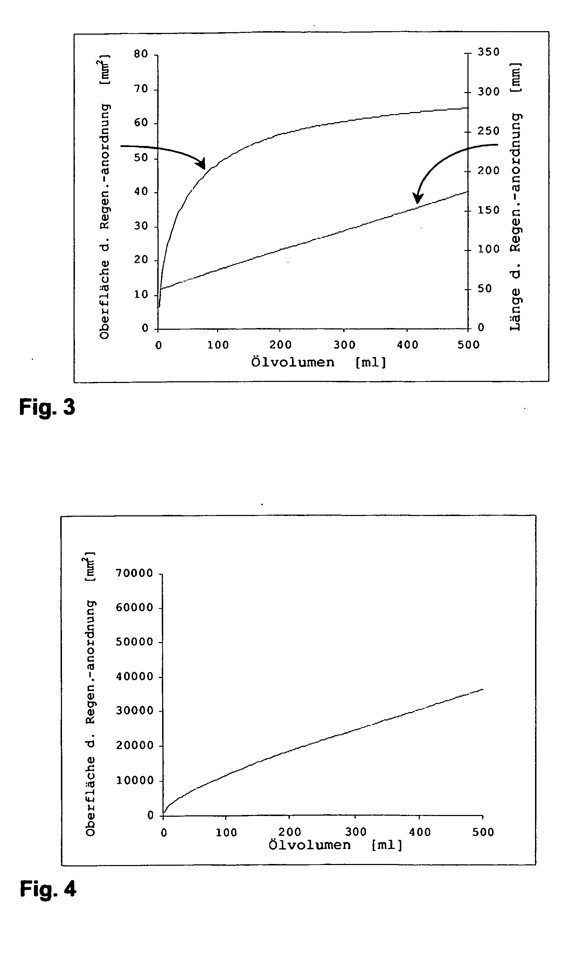

Allgemeine Erwägungen zur Dimensionierung entsprechender Aufbereitungsanordnungen können aus den Figuren 3 bis 7 abgeleitet werden. In dem Diagramm von Figur 3 ist die bei Variation des Durchmessers bzw. der Länge einer zylindrischen Aufbereitungsanordnung sich jeweils ergebende Ölkapazität (Gleichgewichtszustands-Ölvolumen im Destillationsraum) veranschaulicht. In Figur 4 ist die Oberfläche der Ölbehandlungsanordnung abhängig von der Kapazität dargestellt.

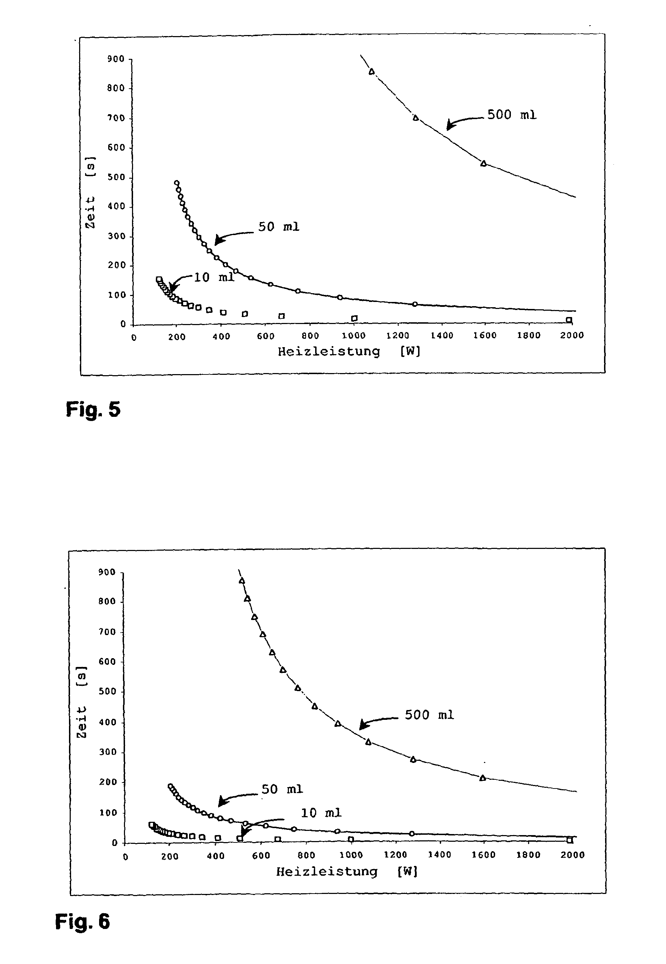

In den Figuren 5 und 6 wird jeweils die Zeit dargestellt, die zum Erreichen von jeweils 99% der Ölfüllung bzw. 99% der Zieltemperatur bei verschiedenen Kapazitäten (10, 50 und 500 ml) abhängig von der zugeführten Heizleistung erforderlich ist, wobei von einer Aufheizung des Öls von 80 °C bis auf 200 °C ausgegangen wird. Wie ersichtlich, erreichen die größeren Aufbereitungsanordnungen die Gleichgewichtszustände erheblich langsamer als die kleineren, wobei bei den größeren Anordnungen zusätzlich Heizleistungen von einigen hundert Watt benötigt werden, um überhaupt einen Gleichgewichtszustand zu erreichen.

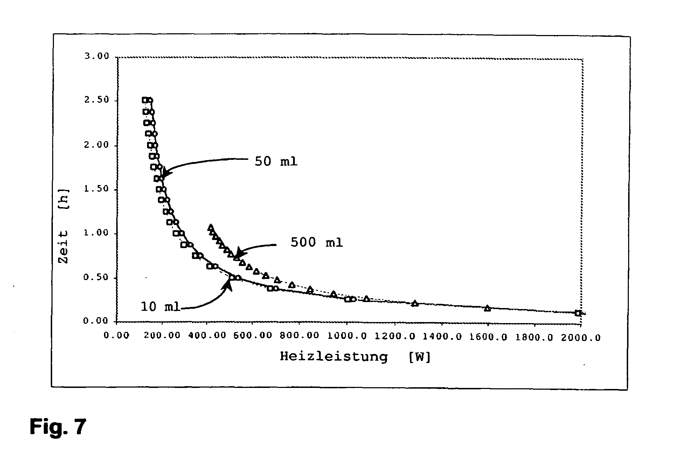

In dem Diagramm von Figur 7 ist schließlich die zu einer vollständigen Regeneration des gesamten Ölvorrats (in diesem Beispiel 4,5 I) erforderliche Zeit in Stunden gegenüber der Heizleistung für verschiedene Kapazitäten aufgetragen. Wie ersichtlich, lassen sich mit höheren Kapazitäten und höheren Leistungen schnellere Gesamtregenerationszeiten erzielen; jedoch sind auch bei kleineren Kapazitäten Regenerationszeiten in einem annehmbaren Bereich erzielbar.

Mit der vorliegenden Erfindung werden zusammenfassend folgende Vorteile erzielt:
- Das Motoröl kann auf hohe Temperaturen erhitzt werden, ohne die Temperatur und damit Schmiereigenschaften des Hauptölflusses nennenswert zu beeinflussen. Beispielsweise führt eine Ölmenge von 50 ml in der Aufbereitungsanordnung, die auf eine Temperatur von 300 °C aufgeheizt wird, bei einer typischen Gesamtölmenge von ca. 5 l zu einer maximalen Temperaturerhöhung im Ölsumpf von lediglich 3 °C.
- Durch kleine Ölzuflüsse und den Aufbau eines permanenten Unterdrucks im Destillationsraum kann die Anordnung mit relativ geringen elektrischen Heizleistungen in der Größenordnung von 40 Watt betrieben werden. Derartige Leistungen können - falls erforderlich - von der elektrischen Anlage des Kraftfahrzeugs problemlos permanent zur Verfügung gestellt werden. Alternativ kann die entsprechende Wärmeenergie auch den Abgasstrom entnommen werden.
- Durch die extreme Miniaturisierung der Aufbereitungsanordnung kann diese optimal gegen Wärmeverluste isoliert und in viele andere Komponenten des Motors integriert werden. Beispielsweise kann die erfindungsgemäße Anordnung in das Lufteinlaßsystem integriert werden, so daß die ausdestillierten gasförmigen Kraftstoffbestandteile unmittelbar in den Lufteinlaß strömen können, so daß keine zur Verhinderung einer Kondensation beheizten Leitungen erforderlich sind.
- Alternativ kann die erfindungsgemäße Aufbereitungsanordnung auch in einen Ölkühler, einen Luftmassenstromsensor, einen EGR-Kühler oder den Motorblock integriert werden.
- Durch die erfindungsgemäß mögliche Aufbereitung des Motoröls kann der Motor im Hinblick auf die Regenerationserfordernisse der Abgasbehandlungsanordnung optimal betrieben werden, ohne in einen Zielkonflikt mit sich verschlechternden Motoröleigenschaften zu geraten. Weiterhin wird der Motorverschleiß durch Aufrechterhaltung der Schmierqualität verringert und die Ölwechselintervalle werden vergrößert.

## Patentansprüche

1. Anordnung (8) zur Aufbereitung von Motoröl im Schmierölkreislauf eines Kraftfahrzeugs, wobei die Anordnung aufweist
- einen Destillationsraum (10) mit einer Heizeinrichtung (34), in dem Motoröl auf derartige Temperaturen erhitzbar ist, daß in dem Motoröl enthaltene leicht flüchtige Verunreinigungen - insbesondere Kraftstoffverunreinigungen - in den gasförmigen Zustand überführt werden,
- einen Öleinlaß (14), durch den ein Teilstrom des Motorölstromes in den Destillationsraum (10) zuführbar ist, wobei dieser Teilstrom an einer Stelle (50) des Motorölkreislaufs abgezweigt wird,
- einen Ölauslaß (18), durch den das Motoröl aus dem Destillationsraum (10) wieder in den Motorölkreislauf an eine Stelle mit geringerem Öldruck (42) zurückführbar ist, und
- einen Gasauslaß (12), durch den die verdampften gasförmigen Bestandteile aus dem Destillationsraum abgeführt werden,
**dadurch gekennzeichnet, daß**
die Heizeinrichtung (34) im Bodenbereich des Destillationsraumes (10) und der Gasauslaß (12) im oberen Bereich des Destillationsraumes angeordnet sind, und daß fest eingestellte oder steuerbare Ventileinrichtungen (16, 20) zur Steuerung des Durchflusses durch den Öleinlaß (14) und/oder den Ölauslaß (18) vorgesehen sind, mittels derer das Motorölniveau im Destillationsraum (10) während des Betriebs der Aufbereitungsanordnung in einem vorgegebenen Niveaubereich gehalten werden kann.

2. Anordnung nach Anspruch 1,
**dadurch gekennzeichnet, daß**
im Destillationsraum (10) knapp oberhalb eines maximal zulässigen Motorölniveaus eine Überlauföffnung (22) angeordnet ist, die mit dem Ölsumpf (42) des Motorölkreislaufs verbunden ist, und deren maximaler Durchfluß derart bemessen ist, daß auch bei maximalem Motorölfluß durch den Öleinlaß (14) ein Überschreiten des maximal zulässigen Motorölniveaus vermieden wird.

3. Anordnung nach Anspruch 1 oder 2,
**dadurch gekennzeichnet, daß**
die Ventileinrichtung (16) am Öleinlaß (14) derart ausgebildet ist, daß bei Vorliegen eines niedrigen Öldrucks im Wesentlichen kein Öl in den Destillationsraum (10) einströmt, und daß die Heizeinrichtung (34) derart ansteuerbar ist, daß diese bei einem höheren Öldruck, bei dem Öl durch den Öleinlaß (14) in den Destillationsraum einströmt, deaktiviert ist, und daß die Heizeinrichtung bei einem niedrigen Öldruck, bei dem im Wesentlichen kein Öl zugeführt wird, solange aktivierbar ist, bis das Öl eine vorgegebene Temperatur erreicht hat.

4. Anordnung nach mindestens einem der Ansprüche 1 bis 3,
**dadurch gekennzeichnet, daß**
der Gasauslaß (12) mit einem Unterdruck führenden Teil des Einlaß- oder Auslaßsystems des Motors in Verbindung steht, derart, daß im Betriebszustand der Anordnung (8) im Destillationsraum ständig Unterdruck herrscht.

5. Anordnung nach mindestens einem der Ansprüche 1 bis 4,
**dadurch gekennzeichnet, daß**
der Gasauslaß mit einem Kondensator (28) in Verbindung steht, an dem die aus dem Motoröl verdampften Kraftstoffbestandteile kondensieren und in ein Kraftstoffzufuhrsystem des Motors (30) zurückgeführt werden.

6. Anordnung nach mindestens einem der Ansprüche 1 bis 5,
**dadurch gekennzeichnet, daß**
die Heizleistung der Heizeinrichtung (34) und der Motoröldurchfluß durch den Destillationsraum (10) derart gesteuert werden, daß das Motoröl in dem Destillationsraum (10) auf eine Temperatur zwischen 150 und 260 °C, vorzugsweise zwischen 160 °C bis 180 °C, gebracht wird.

7. Anordnung nach mindestens einem der Ansprüche 1 bis 6,
**dadurch gekennzeichnet, daß**
diese derart miniaturisiert ausgebildet ist, daß die im Betriebszustand im Destillationsraum befindliche Ölmenge bei Erreichen des vorgegebenen Motorölniveaubereichs zwischen 1 ml und 150 ml, bevorzugt weniger als 50 ml, besonders bevorzugt weniger als 10 ml beträgt.

8. Anordnung nach mindestens einem der Ansprüche 1 bis 7,
**dadurch gekennzeichnet, daß**
der dem Motoröleinlaß der Anordnung zugeführte Ölfluß typischerweise weniger als 1 % des Gesamtölflusses im Schmierölkreislauf ausmacht.

9. Anordnung nach mindestens einem der Ansprüche 1 bis 8,
**dadurch gekennzeichnet, daß**
das Volumen des Destillationsraums (10) und der Motoröldurchfluß durch den Destillationsraum derart ausgelegt sind, daß mit einer elektrischen Heizleistung des Heizelements (34) von weniger als 200 W, vorzugsweise weniger als 50 W, das gesamte Ölvolumen des Motorölkreislaufs während einer Betriebsdauer der Anordnung von weniger als 8 Stunden einmal kurzzeitig auf eine Temperatur von über 160 °C bis 180 °C erhitzbar ist.

10. Anordnung nach mindestens einem der Ansprüche 1 bis 9,
**dadurch gekennzeichnet, daß**
die Anordnung (8) als integrales Teil in einen Ölkühler oder einen Abgasmassenstromsensor oder einen Abgasrückführungskühler oder einen Motorblock des die Anordnung aufweisenden Kraftfahrzeuges integriert ist.

## Claims

1. Arrangement (8) for the treatment of engine oil in the lubricating-oil circuit of a motor vehicle, the arrangement having
- a distillation space (10) with a heating device (34), in which distillation space engine oil can be heated to temperatures such that easily volatile impurities, in particular fuel impurities, contained in the engine oil are transferred into the gaseous state,
- an oil inlet (14), through which a part-stream of the engine-oil stream can be fed into the distillation space (10), this part-stream being branched off at a point (50) of the engine-oil circuit,
- an oil outlet (18) through which the engine oil can be recirculated out of the distillation space (10) into the engine-oil circuit again at a point having a lower oil pressure (42), and
- a gas outlet (12) through which the evaporated gaseous constituents are discharged from the distillation space,
**characterized in that**
the heating device (34) is arranged in the bottom region of the distillation space (10) and the gas outlet (12) is arranged in the upper region of the distillation space, and **in that** permanently set or controllable valve devices (16, 20) are provided for controlling the throughflow through the oil inlet (14) and/or the oil outlet (18), by means of which valve devices the engine-oil level in the distillation space (10) can be maintained within a predetermined level range during the operation of the treatment arrangement.

2. Arrangement according to Claim 1, **characterized in that**, in the distillation space (10), just above a maximum permissible engine-oil level, an overflow orifice (22) is arranged, which is connected to the oil sump (42) of the engine-oil circuit and the maximum throughflow of which is dimensioned such that, even in the case of a maximum engine-oil flow through the oil inlet (14), an overshooting of the maximum permissible engine-oil level is avoided.

3. Arrangement according to Claim 1 or 2, **characterized in that** the valve device (16) at the oil inlet (14) is designed such that, when a low oil pressure prevails, essentially no oil flows into the distillation space (10), and **in that** the heating device (34) can be controlled in such a way that the latter is deactivated in the case of a higher oil pressure at which oil flows through the oil inlet (14) into the distillation space, and **in that**, in the case of a low oil pressure at which essentially no oil is fed, the heating device can be activated until the oil has reached a predetermined temperature.

4. Arrangement according to at least one of Claims 1 to 3, **characterized in that** the gas outlet (12) is connected to a vacuum-carrying part of the inlet or outlet system of the engine, in such a way that a vacuum constantly prevails in the distillation space in the operating state of the arrangement (8).

5. Arrangement according to at least one of Claims 1 to 4, **characterized in that** the gas outlet is connected to a condenser (28) at which the fuel constituents evaporated from the engine oil condense and are recirculated into a fuel feed system of the engine (30).

6. Arrangement according to at least one of Claims 1 to 5, **characterized in that** the heating capacity of the heating device (34) and the engine-oil throughflow through the distillation space (10) are controlled in such a way that the engine oil in the distillation space (10) is brought to a temperature of between 150 and 260°C, preferably of between 160°C and 180°C.

7. Arrangement according to at least one of Claims 1 to 6, **characterized in that** this has a miniaturized design such that the oil quantity located in the distillation space in the operating state when the predetermined engine-oil level range is reached is between 1 ml and 150 ml, preferably less than 50 ml, particularly preferably less than 10 ml.

8. Arrangement according to at least one of Claims 1 to 7, **characterized in that** the oil flow fed to the engine-oil inlet of the arrangement typically amounts to less than 1% of the total oil flow in the lubricating-oil circuit.

9. Arrangement according to at least one of Claims 1 to 8, **characterized in that** the volume of the distillation space (10) and the engine-oil throughflow through the distillation space are designed such that, with an electrical heating capacity of the heating element (34) of less than 200 W, preferably less than 50 W, the total oil volume of the engine-oil circuit can be briefly heated once to a temperature of above 160°C to 180°C during an operating period of the arrangement of less than 8 hours.

10. Arrangement according to at least one of Claims 1 to 9, **characterized in that** the arrangement (8) is integrated as an integral part into an oil cooler or an exhaust-gas mass-flow sensor or a exhaust-gas recirculation cooler or an engine block of the motor vehicle having the arrangement.

## Revendications

1. Agencement (8) de traitement d'huile moteur dans un circuit d'huile de lubrification d'un véhicule automobile, l'agencement présentant :
une chambre de distillation (10) dotée d'un dispositif de chauffage (34) et dans laquelle l'huile moteur peut être chauffée à des températures telles que les impuretés volatiles contenues dans l'huile moteur, en particulier des impuretés provenant du carburant, peuvent être amenées à l'état gazeux,
une admission d'huile (14) par laquelle une partie de l'écoulement d'huile moteur peut être amenée dans la chambre de distillation (10), cet écoulement partiel étant prélevé en un emplacement (50) du circuit d'huile moteur,
une sortie d'huile (18) par laquelle l'huile moteur provenant de la chambre de distillation (10) peut être ramenée dans le circuit d'huile moteur en un emplacement où la pression d'huile (42) est basse et
une sortie de gaz (12) par laquelle les composants gazeux vaporisés peuvent être évacués de la chambre de distillation,
**caractérisé en ce que**
le dispositif de chauffage (34) est disposé dans la partie de base de la chambre de distillation (10) et la sortie de gaz (12) dans la partie supérieure de la chambre de distillation et **en ce que** des dispositifs (16, 20) à soupapes réglées fixement ou asservies sont prévus pour contrôler le débit qui traverse l'admission d'huile (14) et/ou la sortie d'huile (18) et au moyen desquels le niveau d'huile moteur dans la chambre de distillation (10) peut être maintenu dans une plage de niveaux prédéterminée pendant le fonctionnement de l'agencement de traitement.

2. Agencement selon la revendication 1, **caractérisé en ce qu'**une ouverture de débordement (22) est disposée dans la chambre de distillation (10) exactement au-dessus du niveau maximum admissible d'huile moteur et est reliée au carter d'huile (42) du circuit d'huile moteur, son débit maximum étant dimensionné de telle sorte que, même au débit maximum d'huile moteur dans l'admission d'huile (14), le niveau maximum admissible du moteur ne puisse être dépassé.

3. Agencement selon les revendications 1 ou 2, **caractérisé en ce que** le dispositif (16) à soupapes prévu sur l'admission d'huile (14) est configuré de telle sorte que lorsque la pression d'huile est basse, essentiellement aucune huile ne pénètre dans la chambre de distillation (10), **en ce que** le dispositif de chauffage (34) peut être commandé de manière à être désactivé lorsque la pression à laquelle l'huile pénètre dans la chambre de distillation par l'admission d'huile (14) est plus élevée et **en ce qu'**à une basse pression d'huile à laquelle essentiellement aucune huile n'est apportée, le dispositif de chauffage peut être activé tant que l'huile n'a pas atteint une température prédéterminée.

4. Agencement selon au moins l'une des revendications 1 à 3, **caractérisé en ce que** la sortie d'huile (12) communique avec une partie du système d'admission ou du système d'échappement du moteur placée en dépression, de telle sorte qu'une dépression règne en permanence dans la chambre de distillation lorsque l'agencement (8) est en fonctionnement.

5. Agencement selon au moins l'une des revendications 1 à 4, **caractérisé en ce que** la sortie de gaz communique avec un condenseur (28) dans lequel les composants du carburant séparés de l'huile moteur par évaporation se condensent avant d'être renvoyés dans le système d'alimentation en carburant du moteur (30).

6. Agencement selon au moins l'une des revendications 1 à 5, **caractérisé en ce que** la puissance de chauffage du dispositif de chauffage (34) et le débit d'huile moteur qui traverse la chambre de distillation (10) sont commandés de telle sorte que l'huile moteur soit amenée dans la chambre de distillation (10) à une température comprise entre 150 et 260°C et de préférence entre 160°C et 180°C.

7. Agencement selon au moins l'une des revendications 1 à 6, **caractérisé en ce qu'**il est miniaturisé de telle sorte que la quantité d'huile présente dans la chambre de distillation en fonctionnement soit comprise entre 1 ml et 150 ml, soit de préférence inférieure 50 ml et de façon particulièrement préférable inférieure à 10 ml lorsque la plage prédéterminée de niveaux d'huile moteur est atteinte.

8. Agencement selon au moins l'une des revendications 1 à 7, **caractérisé en ce que** le débit d'huile apporté à l'agencement par l'admission d'huile moteur correspond typiquement à moins de 1 % du débit total d'huile dans le circuit d'huile de lubrification.

9. Agencement selon au moins l'une des revendications 1 à 8, **caractérisé en ce que** le volume de la chambre de distillation (10) et le débit d'huile moteur qui traverse la chambre de distillation sont dimensionnés de telle sorte que si la puissance électrique de chauffage de l'élément de chauffage (34) est inférieure à 200 W et de préférence inférieure à 50 W, la totalité du volume d'huile du circuit d'huile moteur puisse être chauffée une fois brièvement à une température supérieure à 160°C - 180°C en moins de 8 heures de fonctionnement de l'agencement.

10. Agencement selon au moins l'une des revendications 1 à 9, **caractérisé en ce que** l'agencement (8) est intégré dans un refroidisseur d'huile, dans un détecteur d'écoulement massique des gaz d'échappement, dans un refroidisseur de recirculation les gaz d'échappement ou dans le bloc moteur du véhicule automobile qui présente l'agencement.
